# EUROPEAN PATENT SPECIFICATION

(11) **EP 3 279 080 B1**
(45) Date of publication and mention of the grant of the patent: **19.02.2020**
(21) Application number: 16182844.7
(22) Date of filing: 04.08.2016
(51) Int. Cl.: B63H 21/38, F01M 11/12, B63H 5/125, G01F 23/00

(54) **LUBRICANT MEASUREMENT SYSTEM FOR AZIMUTH THRUSTER**
SCHMIERMITTELMESSSYSTEM FÜR EIN AZIMUTTRIEBWERK
SYSTÈME DE MESURE DE LUBRIFIANT POUR PROPULSEUR D'AZIMUT

(43) Date of publication of application: 07.02.2018
(73) Proprietor: Caterpillar Propulsion Production AB, 475 22 Öckerö (SE)
(72) Inventor: Lagesson, Niklas, 42339 Torslanda (SE)
(74) Representative: BRP Renaud & Partner mbB Rechtsanwälte Patentanwälte Steuerberater

(56) References cited:
- US-A- 4 591 839
- US-A1- 2014 318 898
- US-A1- 2015 021 120
- US-B1- 8 220 482

## Description

### Technical Field

The present disclosure relates to a method for setting a lubricant level measuring device of an azimuth thruster, and an azimuth thruster including a lubricant level measuring device.

### Background

Azimuth thrusters are commonly used as propulsion devices for marine vessels. Azimuth thrusters are at least partly arranged beneath a hull of a marine vessel and typically comprise an upper gear unit, an azimuth unit and a lower gear unit. The upper gear unit is connected to a horizontal drive shaft via an upper gear crown wheel and configured to mechanically drive a vertical input shaft of the azimuth thruster. The azimuth unit is connected to the upper gear unit via a slewing bearing. The azimuth unit has an outer azimuth stem and an inner azimuth stem. The slewing bearing allows a relative rotation between the outer azimuth stem and the inner azimuth stem so that the azimuth thruster can be slewed for maneuvering the vessel. The lower gear unit includes one or more propellers connected to the vertical input shaft for providing thrust to the marine vessel. Arrangements of a lubrication system are known from documents US 2015/021120 A1 and US 2014/318898 A1. General leak detection systems are known from documents US 8 220 482 B1 and US 4 591 839 A.

Lubrication of the azimuth thruster typically is such that the slewing bearing within the azimuth unit is immersed in lubricant to arrange a full bath lubrication, whereas the upper gear crown wheel within the upper gear unit is splash lubricated. The splash lubrication is arranged to reduce frictional losses due to the upper gear crown wheel churning the lubricant.

The present disclosure is directed, at least in part, to improving or overcoming one or more aspects of prior systems.

### Summary of the Disclosure

In one aspect, the present disclosure relates to a method for setting a lubricant level measuring device of an azimuth thruster installed in a marine vessel. The method comprises determining an installation orientation of the azimuth thruster in the marine vessel. The method further comprises adjusting a lubricant measuring location of the lubricant level measuring device based on the determined installation orientation of the azimuth thruster, wherein the step of determining an installation orientation comprises determining a tilt installation angle α, β1, β2, γ of the azimuth thruster, wherein the method step of adjusting a lubricant measuring location of the lubricant level measuring device comprises adjusting a position of a movable meter tube of the lubricant level measuring device, wherein a table, an equation, a diagram or a graph is used to directly determine an adjustment of the lubricant measuring location of the lubricant level measuring device (170) based on the determined installation orientation of the azimuth thruster (100), wherein said table is provided to shows an extension length H of the meter tube depending from one or more of the tilt installation angles α, β1, β2, γ.

In another aspect, the present disclosure relates to an azimuth thruster for a marine vessel, said azimuth thruster (100) being operable for a tilt installation angle (α, β1, β2, γ). The azimuth thruster comprises an azimuth unit for slewing the azimuth thruster, and an adjustable lubricant level measuring device arranged to measure a lubricant level at the azimuth unit. The lubricant level measuring device is adjustable to set a lubricant level measuring location of the lubricant level measuring device. The lubricant measuring device includes a movable meter tube defining the lubricant level measuring location. An extension length H of the meter tube may have to be adjustable up to about 200 mm or more in situations with large tilting angles of about 8° compared to installation orientations having a tilting angle of 0° to ensure a measurement at a proper location in the first lubricant compartment 160. The lubricant measuring device further includes a clamp member configured to releasably secure the meter tube such that after adjusting the lubricant level measuring device, the movable meter tube is fixed in the adjusted position by tightening the clamp member.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
- Fig. 1 shows a schematic drawing of an exemplary azimuth thruster for a marine vessel according to the present disclosure;
Fig. 2 shows a schematic drawing of an exemplary lubricant level measuring device according to the present disclosure;
Fig. 3 shows a schematic drawing of a portion of the azimuth thruster, particularly a portion of the slewing bearing and the separator plate; including the measuring device of Fig. 2, according to the present disclosure;
Figs. 4A and 4B show schematic drawings of different installation orientations of the exemplary azimuth thruster;
Fig. 5 shows a sectional view of the azimuth thruster with the exemplary lubricant level measuring device in a first installation orientation, and indicates an exemplary lubricant level; and
Fig. 6 shows a sectional view of the azimuth thruster with the exemplary lubricant level measuring device in a second installation orientation, and indicates an exemplary lubricant level.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that an installation orientation of the azimuth thruster in the hull of the marine vessel influences the measuring system for measuring the lubricant level in the azimuth thruster. Particularly, providing the azimuth thruster in a tilted arrangement changes the extent to which a lubricant level measuring device is immersed in lubricant.

The present disclosure is further based in part on the realization that the tilted arrangement of the azimuth thruster may lead to situations in which a component of the azimuth thruster is not uniformly immersed in lubricant. The reason is that said component has a tilted arrangement together with the other components of the azimuth thruster, but the lubricant surface area maintains its horizontal orientation. Said situation may particularly apply for the slewing bearing for slewing the azimuth thruster.

Accordingly, herein an adjustable lubricant level measuring device and a related method is disclosed, which allow setting a lubricant level measuring location based on the installation orientation of the azimuth thruster.

Referring now to the drawings. It should be noted that throughout the drawings, like elements are referred to with the same reference signs.

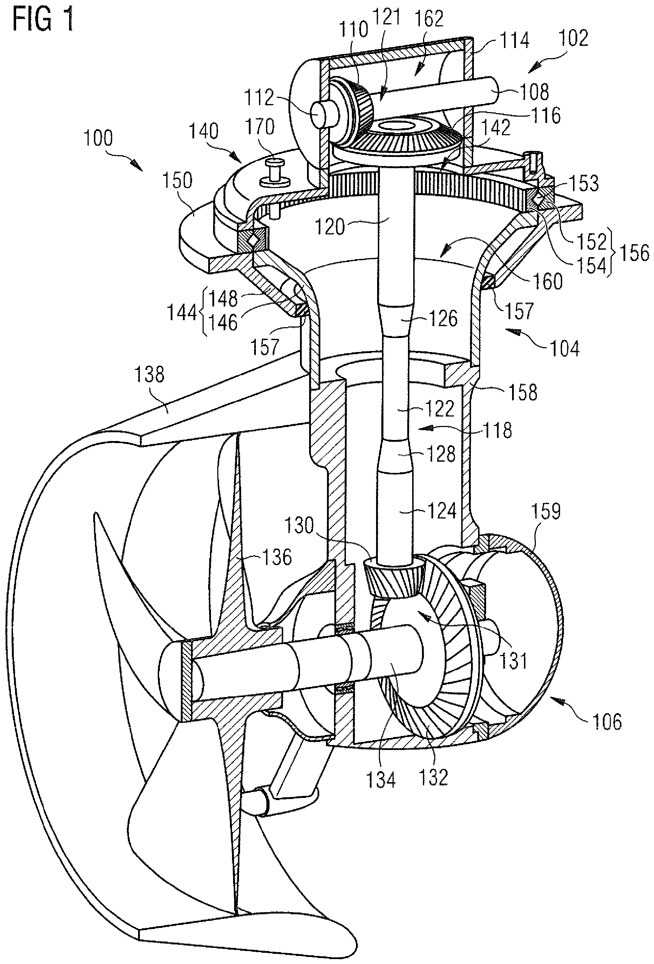

Fig. 1 shows a schematic drawing of an exemplary azimuth thruster 100 for a marine vessel. The azimuth thruster 100 includes an upper gear unit 102, an azimuth unit 104 and a lower gear unit 106.

The upper gear unit 102 includes a substantially horizontal drive shaft 108 terminating to an upper gear pinion wheel 110. The upper gear pinion wheel 110 includes an upper gear pinion wheel extension 112 configured to rotatably support the horizontal drive shaft 108 within an upper gear housing 114. The upper gear pinion wheel 110 is configured to transmit power from the horizontal drive shaft 108 to an upper gear crown wheel 116.

The upper gear crown wheel 116 is mounted on top of a substantially vertical input shaft 118. The vertical input shaft 118 includes an upper crown wheel shaft 120, an intermediate shaft 122, and a lower pinion shaft 124. The upper crown wheel shaft 120 is drivably connected to the intermediate shaft 122 via a first connection 126. The lower pinion shaft 124 is drivably connected to the intermediate shaft 122 via a second connection 128. The first and second connections 126, 128 may be splined connections, flexible shaft couplings and/or floating shaft couplings.

The horizontal drive shaft 108, the upper gear pinion wheel 110, the upper gear crown wheel 116 and the upper crown wheel shaft 120 together form part of an upper gear transmission 121.

The vertical input shaft 118 terminates to a lower gear pinion wheel 130 formed on the lower pinion shaft 124. The lower gear pinion wheel 130 extends into the lower gear unit 106 and transmits the power to a lower gear crown wheel 132. The lower gear crown wheel 132 is connected to a propeller shaft 134. The propeller shaft 134 extends substantially horizontal and is provided with a propeller 136 for providing thrust to the azimuth thruster 100. The propeller 136 may be any type of propeller 136 known to a person skilled in the art, for example a variable or fixed pitch propeller.

The lower gear pinion wheel 130, the lower gear crown wheel 132 and the propeller shaft 134 together form a lower gear transmission 131. The lower gear transmission 131 is disposed inside the lower gear unit 106.

The propeller 136 is surrounded by a nozzle 138. The nozzle 138 is fixedly connected to the lower gear unit 106 and may be any type of nozzle known to a person skilled in the art. The nozzle 138 is configured to increase a thrust of the propeller 136 and to protect the propeller 136 against, for example, debris. In some embodiments, the azimuth thruster 100 may not include the nozzle 138.

For maneuvering the marine vessel, the lower gear unit 106 including the propeller 136 and the nozzle 138 need to be rotated (slewed) around the vertical input shaft 118. This means that the upper gear unit 102 needs to be stationary, e.g. non-rotatable, whereas the lower gear unit 106 needs to be rotatable. To rotate the lower gear unit 106 relative to the upper gear unit 102 and thus about the vertical input shaft 118, the azimuth thruster 100 includes the azimuth unit 104.

The azimuth unit 104 is connected to the upper gear unit 102 via a separation plate 140. The separation plate 140 includes an opening 142 configured to at least partially accommodate the upper crown wheel shaft 120. Thus, the separation plate 140 at least partially separates the azimuth unit 104 from the upper gear unit 102. An upper crown wheel shaft housing (not shown) may be connected to the separation plate 140 and may protrude through the opening 142 for rotatably supporting the upper crown wheel shaft 120 via suitable bearings.

The azimuth unit 104 further includes an azimuth stem 144 with an inner azimuth stem 146 and an outer azimuth stem 148. The outer azimuth stem 148 is connected to the separation plate 140 via an outer ring body 152. The outer ring body 152 is fixedly connected to an annular flange 150 of the outer azimuth stem 148. The annular flange 150 is fixedly connected to a hull structure (foundation) of the marine vessel. Thus, the outer azimuth stem 148 including the separation plate 140 and the upper gear unit 102 are stationary, e.g. non-rotatable, with respect to the marine vessel.

A ring-shaped gearwheel 154 is rotatable relative to the outer ring body 152 via a plurality of suitable bearings 153. The ring-shaped gearwheel 154 is fixedly connected to the inner azimuth stem 146. The outer ring body 152 and the ring-shaped gearwheel 154 together form a slewing bearing 156. Specifically, the outer ring body 152 forms an outer race of the slewing bearing 156, and the ring-shaped gearwheel 154 forms an inner race of the slewing bearing 156. The slewing bearing 156 is configured to allow a rotation of the inner azimuth stem 146 relative to the outer azimuth stem 148 (relative rotation between the ring-shaped gearwheel 154 and the outer ring body 152).

The ring-shaped gearwheel 154 includes teeth on an inner circumferential face. A slewing drive including at least one drive gearwheel (both not shown) is arranged to rotate the ring-shaped gearwheel 154. Specifically, teeth on an outer circumferential face of the at least one drive gearwheel engage with the teeth on the inner circumferential face of the ring-shaped gearwheel 154. Thus, the slewing drive rotates the at least one drive gearwheel which in turn rotates the ring-shaped gearwheel 154 relative to the outer ring body 152.

The inner azimuth stem 146 is connected at its lower part to a vertical shaft housing 158. The vertical shaft housing 158 surrounds the vertical input shaft 118 and connects the inner azimuth stem 146 with the lower gear unit 106. The vertical shaft housing 158 is fixedly connected to a lower gear housing 159. The lower gear housing 159 surrounds the lower gear transmission of the lower gear unit 106.

As the outer azimuth stem 148 is non-rotatably connected to the hull structure of the marine vessel, and as the inner azimuth stem 146 is rotatably connected to the outer azimuth stem 148 via the slewing bearing 156, the lower gear unit 106 is rotatable relative to the upper gear unit 102 via the slewing bearing 156.

Inside the azimuth unit 104 a first lubricant compartment 160 is disposed to accommodate lubricant for bath lubricating the slewing bearing 156. Lubricant may be any type of lubricant known to a person skilled in the art. For example, the lubricant may be oil.

The first lubricant compartment 160 is formed by an annular space surrounding the vertical input shaft 118. The first lubricant compartment 160 is filled with lubricant such that the slewing bearing 156 is immersed in lubricant for arranging a full bath lubrication of the slewing bearing 156. For keeping the lubricant within the azimuth stem 144, a radial shaft seal 157 is arranged between a lower end of the outer azimuth stem 148 and a lower end of inner azimuth stem 146.

Typically, the first lubricant compartment 160 accommodates a volume of lubricant in a range between about 0.5 m³ and about 3 m³, depending on the type and size of the azimuth thruster 100 and the inner azimuth stem 146.

Inside the upper gear unit 102 a second lubricant compartment 162 is disposed. The second lubricant compartment 162 is configured to accommodate lubricant for splash lubricating the upper gear pinion wheel 110 and the upper gear crown wheel 116. For this, lubricant spray nozzles (not shown) may be disposed inside the upper gear unit 102. The lubricant spray nozzles are configured to spray lubricant onto the upper gear transmission, thereby providing a splash lubrication of the upper gear pinion wheel 110 and the upper gear crown wheel 116. In some embodiments, for example, pinched lubricant pipes may be used instead of lubricant spray nozzles.

The first lubricant compartment 160 disposed inside the azimuth unit 104 and the second lubricant compartment 162 disposed inside the upper gear unit 102 are fluidly connected via the opening 142. Thus, lubricant sprayed onto the upper gear pinion wheel 110 and the upper gear crown wheel 116 drains from the second lubricant compartment 162 to the first lubricant compartment 160 via the opening 142. On the other hand, lubricant accommodated in the first lubricant compartment 160 may enter the second lubricant compartment 162 via the opening 142. Lubricant may enter the second lubricant compartment 162, for example, during operation of the azimuth thruster 100, because during operation of the azimuth thruster 100 lubricant expands and the space provided in the first lubricant compartment 160 for accommodating lubricant may not be sufficient to accommodate the expanded lubricant. Lubricant expansion is caused by heat and aeration. Thus, during normal operation of the azimuth thruster 100 lubricant may enter the second lubricant compartment 162 and reach at least partially the upper gear transmission, such as the upper gear crown wheel 116.

However, if parts of the upper gear transmission are immersed in lubricant, frictional losses occur due to gearwheels churning lubricant. As a consequence, an efficiency of the upper gear transmission and, thus, an efficiency of the azimuth thruster 100 may be reduced.

To prevent upper gear crown wheel 116 and thus the upper gear transmission to be immersed in lubricant, a suitable lubricant level has to be initially set depending on an installation orientation of the azimuth thruster 100. For setting the suitable lubricant level, a lubricant level measuring device 170 is provided.

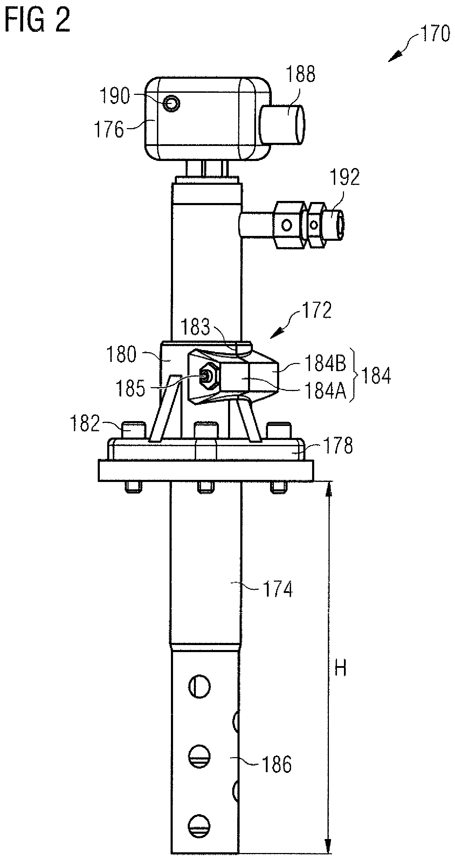

Fig. 2 shows a schematic drawing of the lubricant level measuring device 170. The lubricant level measuring device 170 includes a support 172, a meter tube 174, and an output member 176.

The support 172 includes a base plate 178 and a hollow cylindrical body 180. The base plate 178 is attached to an upper face of the separation plate 140 (for example see Fig. 1) via a plurality of screws 182. The body 180 is attached to an upper face of the base plate 178 such that the throughhole defined by the body 180 is aligned with a throughhole through the base plate 178. The body 180 includes a slot 183 extending at least partially along the longitudinal extension of the body 180.

The support 172 includes a clamp member 184 configured to releasably clamp the meter tube 174. Specifically, two clamp elements 184A and 184B of the clamp member 184 are attached to opposing sides of the body 180 which are separated by the slot 183. A screw or bolt 185 connects the two clamp elements 184A and 184B. The screw 185 can be tightened or released to tighten or release the clamp elements 184A and 184B and thus the clamp member 184.

When tightening the clamp elements 184A and 184B, the meter tube 174 extending through the hollow cylindrical body 180 is fixedly hold, and cannot be moved with respect to the support 172 and thus the separation plate 140. On the other hand, when releasing the clamp member 184, the meter tube 174 is movable relative to the support 172 in a longitudinal direction of the meter tube 174. By adjusting a longitudinal position of the meter tube 174 with respect to the support 172, an extension length H of the meter tube 174 extending into the first lubricant compartment 160 (for example see Fig. 1) is adjustable. Alternatively, any other securing device configured to releasably hold/secure (lock) the meter tube 174 may be provided instead of or in addition to the clamp member 184.

The meter tube 174 includes a measuring portion 186, for example at an end section thereof. The measuring portion 186 is configured to detect whether lubricant contacts the measuring portion 186 or not. The measuring portion 186 provides at least one measuring location. In the shown embodiment, the measuring portion 186 provides a plurality of measuring locations defined by horizontal throughholes allowing lubricant to enter an inner chamber of the measuring portion 186 in which a sensor element (not shown) for detecting the presence of lubricant is disposed.

In some embodiments, the lubricant level measuring device 170 may be configured to provide a discrete measuring range including one or more lubricant measuring locations defined by one or more sensor elements of the measuring portion 186. Additionally or alternatively, the lubricant level measuring device 170 may be configured to provide a continuous measuring range defined by one or more sensor elements of the measuring portion 186.

The output member 176 is connected to a top end of the meter tube 174 and electronically connected to the measuring portion 186. The output member 176 includes a connector 188 for connecting to a control unit (not shown) for providing a signal indicative of a measured lubricant level. The output member 176 may further include one or more indicator lamps for signaling an operation status and/or a lubricant level to service technicians in the vicinity of the lubricant level measuring device 170.

The lubricant level measuring device 170 further includes a port 192. The port 192 is connectable to an air hose. The air hose allows an air exchange between the lubricant level measuring device 170, particularly the measuring portion 186, and an environment or another section of the azimuth thruster 100, for example, the upper gear unit 102. Air bubbles trapped inside the measuring portion 186 can be released through the port 192 and the air hose to avoid misreadings due to the presence of the air bubbles.

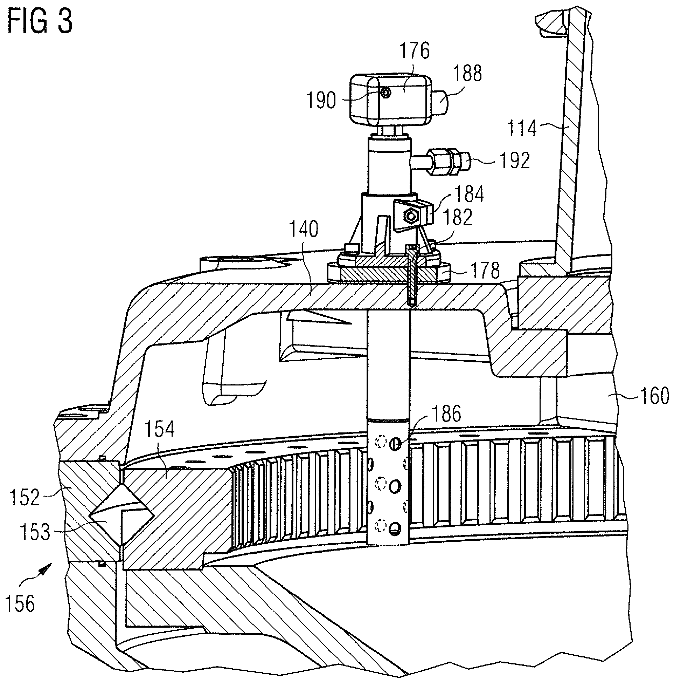

Referring to Fig. 3, the lubricant level measuring device 170 is shown in a mounted state.

The base plate 178 is fixed to the separation plate 140 by the screws 182. The meter tube 174 extends through the support 172 to extend into the first lubricant compartment 160. The measuring portion 186 is disposed to measure a lubricant level at the slewing bearing 156. Particularly, the measuring portion 186 is disposed in a region radially inwards from the ring-shaped gearwheel 154 with respect to an axis of the input shaft 118 (for example see Fig. 1).

The measuring portion 186 is in a position fixed by the clamping member 184. The fixed position is selected to ensure that at least one measuring location defined by the measuring portion 186 measures a lubricant level at (in the vicinity of) the slewing bearing 156. Said measuring location is selected to check whether the slewing bearing 156 is (at least partially) immersed in lubricant to a desired extent. Bath lubrication of the slewing bearing 156 is required for proper operation of the slewing bearing 156.

In the following, it is explained how the fixed position of the measuring portion is specifically selected based on an installation orientation of the azimuth thruster 100.

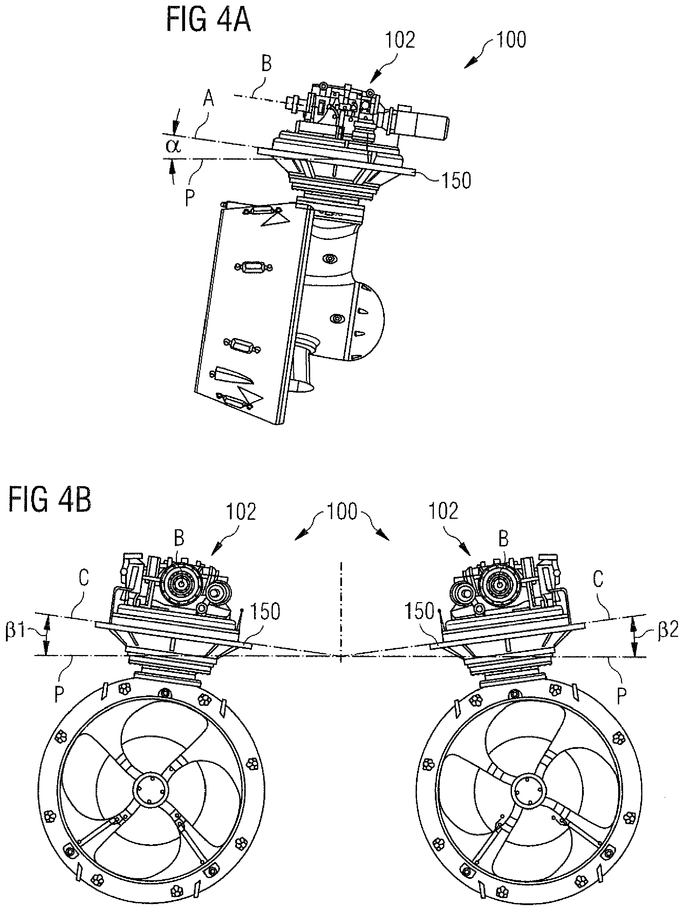

As can be seen in Figs. 4A to 4B, the azimuth thruster 100 may be installed in the marine vessel in a tilted orientation. The tilted orientation may be required, for example, due to structural limitations of the hull of the marine vessel, and fluid dynamics resulting from the outer shape of the hull.

Fig. 4A shows that the azimuth thruster 100 may be installed such that a first tilt installation angle α is confined between a horizontal plane P (of the marine vessel) and an axis A parallel to a longitudinal axis B of the drive shaft 108 (for example see Fig. 1) of the upper gear unit 102. Specifically, the axis B lies in a plane defined by a top face of the annular flange 150, and the axis B extends in a direction parallel to the longitudinal axis B.

The azimuth thruster 100 may be properly operable for first tilt installation angles α smaller than about 10°, particularly within a range between about 0° and about 8°.

Fig. 4B shows that the azimuth thruster 100 may be installed such that a second or third tilt installation angle β1 or β2 is confined between the horizontal plane P (of the marine vessel) and an axis C perpendicular to the longitudinal axis B of the drive shaft 108 of the upper gear unit 102. Specifically, the axis C lies in a plane defined by a top face of the annular flange 150, and the axis C extends in a direction parallel to a radial direction of the drive shaft 108 (for example see Fig. 1) of the upper gear unit 102.

The azimuth thruster 100 may be properly operable for second and third tilt installation angles β1 and β2 smaller than about 10°, particularly within a range between about 0° and about 8°.

The lubricant level in the azimuth thruster 100 depends on the tilt installation angles α, β1, β2. According to the present disclosure, the lubricant level measuring device 170, particularly the lubricant measuring location defined by the measuring portion 186, is adjusted based on the installation orientation of the azimuth thruster 100 in the marine vessel. Particularly, a lubricant measuring location is adjusted based on the tilt installation angles α, β1, β2.

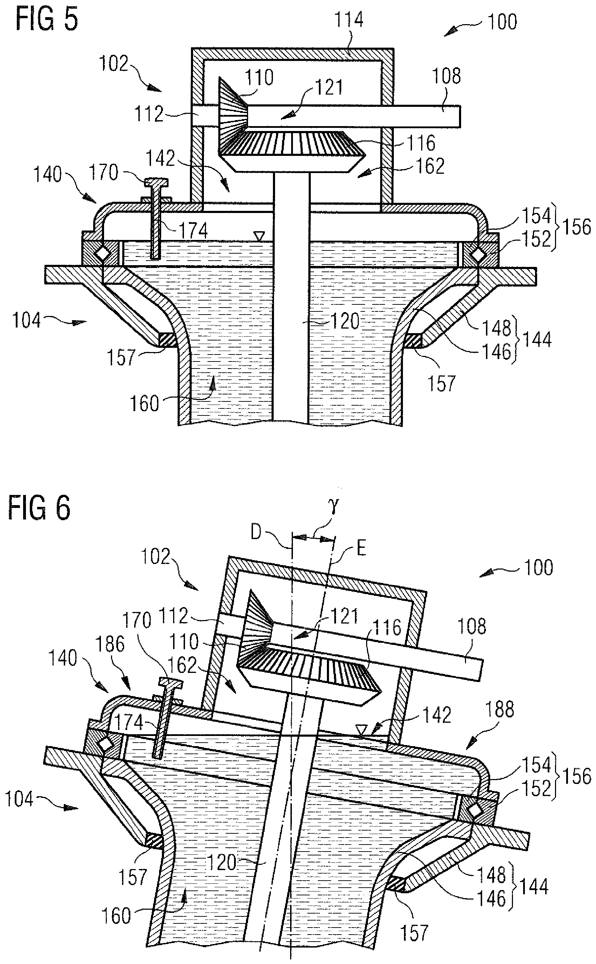

Referring to Figs. 5 and 6 which show the lubricant level of lubricant in the first lubricant compartment 160 for different tilt installation angles. Specifically, Fig. 5 shows a situation in which the azimuth thruster 100 is not tilted. Fig. 6 shows a situation in which the azimuth thruster 100 is installed in the marine vessel in a tilted manner. In Fig. 6, the tilted installation is indicated by a fourth tilt installation angle γ defined between a vertical axis D, and a longitudinal axis E of the input shaft 118.

As can be seen in Fig. 6, the lubricant level maintains a horizontal lubricant surface area although the azimuth thruster 100 is installed in a tilted manner. This may lead to incorrect or inaccurate lubricant level measurements and/or improper lubrication of the slewing bearing 156 as explained hereinbelow.

In the following, assuming that a fixed lubricant level measuring device with a fixed lubricant measuring location would be used. The assumed lubricant level measuring device would not accurately measure the lubricant level in the tilted installation orientation if the installation angle is not considered when installing the assumed lubricant level measuring device. Specifically, the assumed lubricant level measuring device would indicate a too high or too low lubricant level depending on the installation position of the assumed lubricant level measuring device. It may happen that an inaccurate lubricant level indicated by the assumed lubricant level measuring device leads to wrong conclusions by a control unit or an operator.

For example, one might conclude that too little lubricant is present in the first lubricant compartment 160. Thus, one may refill lubricant. The resulting lubricant level may be such high that the upper gear unit 102, particularly the upper gear crown wheel 116 and/or the upper gear pinion wheel 110, is at least partially immersed in the lubricant. As described above, this is generally undesirable.

In another example, one might conclude that the lubricant level corresponds to a desired lubricant level. However, instead, the lubricant level may be below a desired lubricant level. The slewing bearing 156, which requires bath lubrication, may not be immersed in lubricant, or may be immersed in lubricant to a too small extent. This may lead to increased wear of the slewing bearing 156.

To prevent above-noted problems, the present disclosure suggests a method for setting the lubricant level measuring device 170 as described in the following by referring to Figs. 1 to 6.

Initially, the azimuth thruster 100 is installed in the marine vessel in a desired arrangement, for example a tilted arrangement. The lubricant level measuring device 170 is also installed at a position which allows for measurement of a lubricant level at a slewing bearing 156. For example, as shown in Figs. 1, 3, 5 and 6, the lubricant level measuring device 170 may be installed to extend through the separation plate 140. Alternative arrangement may include an installation position of the lubricant level measuring device 170 in or at the upper gear unit 102, for example.

In another method step, the installation orientation of the azimuth thruster 100 is determined, particularly one or more installation angles α, β1, β2, γ may be determined. For example, the installation orientation may be determined to correspond to a tilt installation angle γ of 5°.

Based on the determined installation orientation of the azimuth thruster 100, a desired lubricant level of the azimuth thruster 100 may be determined. The desired lubricant level may be selected to ensure that the slewing bearing 156 is immersed in lubricant to a desired extent in the determined tilted arrangement of the azimuth thruster 100.

Then, the lubricant measuring location defined by the measuring portion 186 of the lubricant level measuring device 170 is adjusted based on the desired lubricant level to detect the presence of lubricant in a region around the desired lubricant level. Particularly, a position of the movable meter tube 174 of the lubricant level measuring device 170 is adjusted such that the measuring portion 186 is positioned in a region of the desired lubricant level.

Specifically, the extension length H of the movable meter tube 174 is adjusted to ensure that the measuring portion 186 is able to indicate if a lubricant level corresponds to the desired lubricant level, exceeds an upper lubricant level threshold, and/or is below a lower lubricant level threshold. The upper lubricant level threshold may be chosen, for example, to ensure that the lubricant level does not reach the upper gear unit 102, in other words, the upper gear unit 102 is not immersed in lubricant. The lower lubricant level threshold may be chosen, for example, to ensure that the lubricant level is not below the slewing bearing 156.

For adjusting the extension length H, a service technician may adjust a height of the movable meter tube 174 measured between an upper face of the separation plate 140 and the output member 176.

In some embodiments, the method step of determining the desired lubricant level may not be carried out directly. Instead, a table, an equation, a diagram, a graph, etc. may be used to directly determine an adjustment of the lubricant measuring location of the lubricant level measuring device 170 based on the determined installation orientation of the azimuth thruster 100. Those tables, equations etc. may indirectly consider the desired lubricant level without explicitly stating the same. For example, a table may be provided which shows the extension length H of the meter tube 174 depending one or more of the tilt installation angles α, β1, β2, γ.

It was found that an extension length H of the meter tube 174 may have to be adjusted up to about 200 mm or more in situations with large tilting angles of about 8° compared to installation orientations having a tilting angle of 0° to ensure a measurement at a proper location in the first lubricant compartment 160.

After adjusting the lubricant level measuring device 170, the movable meter tube 174 is fixed in the adjusted position by tightening the clamp member 184 and/or any other suitable securing mechanism. From now on, lubricant level values measured and provided by the lubricant level measuring device 170 are usable for correctly and accurately determining if a suitable lubricant level is present in the azimuth thruster 100.

### Industrial Applicability

The method for setting a lubricant level measuring device as disclosed herein is applicable to adjust a lubricant measuring location of a lubricant level measuring device used for measuring a lubricant level in an azimuth thruster. The azimuth thruster as disclosed herein is applicable for providing a thrust system to a marine vessel (ship, oilrig, etc.).

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1 % or less, and still more preferably ±0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A method for setting a lubricant level measuring device (170) of an azimuth thruster (100) installed in a marine vessel, the method comprising:
determining an installation orientation of the azimuth thruster (100) in the marine vessel by determining a tilt installation angle (α, β1, β2, γ) of the azimuth thruster (100); and
adjusting a lubricant measuring location of the lubricant level measuring device (170) based on the determined installation orientation of the azimuth thruster (100) by adjusting a position of a movable meter tube (174) of the lubricant level measuring device (170);
wherein a table, an equation, a diagram or a graph is used to directly determine an adjustment of the lubricant measuring location of the lubricant level measuring device (170) based on the determined installation orientation of the azimuth thruster (100), wherein said table is provided to show an extension length (H) of the meter tube (174) depending from one or more of the tilt installation angles (α, β1, β2, γ).

2. The method of any one of the preceding claims, wherein the method step of adjusting a lubricant measuring location comprises adjusting the lubricant measuring location in a first lubricant compartment (160) of the azimuth thruster, the first lubricant compartment (160) being defined by a slewing bearing (156) for slewing the azimuth thruster (100), an azimuth stem (144) of the azimuth thruster (100), and a separation plate (140) interposed between the slewing bearing (156) and an upper gear housing (114).

3. The method of any one of the preceding claims, wherein the lubricant measuring location is adjusted to allow determining if a slewing bearing (156) of the azimuth thruster (100) for slewing the azimuth thruster (100) is immersed in lubricant to a desired extent.

4. The method of any one of the preceding claims, wherein the lubricant measuring location is adjusted to allow determining if an upper gear unit (102) of the azimuth thruster (100) is at least partially immersed in lubricant.

5. The method of any one of the preceding claims, wherein the lubricant measuring location is adjusted to allow determining if the lubricant level is below a slewing bearing (156) of the azimuth thruster (100) for slewing the azimuth thruster (100).

6. The method of any one of the preceding claims, further comprising arranging the lubricant level measuring device (170) at a separation plate (140) interposed between an upper gear housing (114) of the azimuth thruster (100) and a slewing bearing (156) of the azimuth thruster (100).

7. The method of any one of the preceding claims, further comprising determining a desired lubricant level of the azimuth thruster (100) based on the determined installation orientation, and the method step of adjusting a lubricant measuring location is based on the determined desired lubricant level.

8. The method of any one of the preceding claims, further comprising fixing the adjusted measuring location of the lubricant level measuring device (170).

9. An azimuth thruster (100) for a marine vessel, said azimuth thruster (100) being operable for a tilt installation angle (α, β1, β2, γ), comprising:
- an azimuth unit (104) for slewing the azimuth thruster (100), and
- an adjustable lubricant level measuring device (170) arranged to measure a lubricant level at the azimuth unit (104), the lubricant level measuring device (170) being adjustable to set a lubricant level measuring location of the lubricant level measuring device (170), wherein the lubricant measuring device includes:
a movable meter tube (174) defining the lubricant level measuring location, wherein an extension length H of the meter tube (174) may have to be adjustable up to about 200 mm or more in situations with large tilting angles of about 8° compared to installation orientations having a tilting angle of 0° to ensure a measurement at a proper location in the first lubricant compartment 160;
a clamp member (184) configured to releasably secure the meter tube (174) such that after adjusting the lubricant level measuring device (170), the movable meter tube (174) is fixed in the adjusted position by tightening the clamp member (184).

10. The azimuth thruster (100) of claim 9, further comprising:
an upper gear housing (114); and
a separation plate (140) interposed between the upper gear housing (114) and the azimuth unit (104),
wherein the lubricant level measuring device (170) is arranged at the separation plate (140).

11. The azimuth thruster (100) of any one of claims 9 to 10, wherein:
the lubricant level measuring device (170) is configured to provide a discrete measuring range including at least one lubricant level measuring location; or
the lubricant level measuring device (170) is configured to provide a continuous measuring range.

12. The azimuth thruster (100) of any one of claims 9 to 11, wherein:
the lubricant level measuring device (170) is connectable to a control unit of the azimuth thruster (100).

## Patentansprüche

1. Verfahren zum Einstellen einer Schmiermittelfüllstandsmessvorrichtung (170) eines Azimuttriebwerks (100), das in einem Schiff installiert ist, wobei das Verfahren umfasst:
Bestimmen einer Installationsorientierung des Azimuttriebwerks (100) in dem Schiff durch Bestimmen eines Neigungsinstallationswinkels (α, β1, β2, γ) des Azimuttriebwerks (100); und
Anpassen einer Schmiermittelmessstelle der Schmiermittelfüllstandsmessvorrichtung (170) basierend auf der bestimmten Installationsorientierung des Azimuttriebwerks (100) durch Anpassen einer Position eines beweglichen Messrohrs (174) der Schmiermittelfüllstandsmessvorrichtung (170);
wobei eine Tabelle, eine Gleichung, ein Diagramm oder eine Grafik zum direkten Bestimmen einer Anpassung der Schmiermittelmessstelle der Schmiermittelfüllstandsmessvorrichtung (170) basierend auf der bestimmten Installationsorientierung des Azimuttriebwerks (100) verwendet wird, wobei die Tabelle bereitgestellt wird, um eine Erweiterungslänge (H) des Messrohrs (174) in Abhängigkeit von einem oder mehreren der Neigungsinstallationswinkel (α, β1, β2, γ) zu zeigen.

2. Verfahren nach einem der vorstehenden Ansprüche, wobei der Verfahrensschritt des Anpassens einer Schmiermittelmessstelle das Anpassen der Schmiermittelmessstelle in einer ersten Schmiermittelkammer (160) des Azimuttriebwerks umfasst, wobei die erste Schmiermittelkammer (160) durch ein Schwenklager (156) zum Schwenken des Azimuttriebwerks (100), einen Azimutschaft (144) des Azimuttriebwerks (100) und eine Trennplatte (140) definiert wird, die zwischen dem Schwenklager (156) und einem oberen Getriebegehäuse (114) angeordnet ist.

3. Verfahren nach einem der vorstehenden Ansprüche, wobei die Schmiermittelmessstelle so angepasst wird, dass bestimmt werden kann, ob ein Schwenklager (156) des Azimuttriebwerks (100) zum Schwenken des Azimuttriebwerks (100) in einem gewünschten Ausmaß in Schmiermittel eingetaucht ist.

4. Verfahren nach einem der vorstehenden Ansprüche, wobei die Schmiermittelmessstelle so angepasst wird, dass bestimmt werden kann, ob eine obere Getriebeeinheit (102) des Azimuttriebwerks (100) mindestens teilweise in Schmiermittel eingetaucht ist.

5. Verfahren nach einem der vorstehenden Ansprüche, wobei die Schmiermittelmessstelle so angepasst wird, dass bestimmt werden kann, ob der Schmiermittelfüllstand unterhalb eines Schwenklagers (156) des Azimuttriebwerks (100) zum Schwenken des Azimuttriebwerks (100) liegt.

6. Verfahren nach einem der vorstehenden Ansprüche, ferner umfassend das Anordnen der Schmiermittelfüllstandsmessvorrichtung (170) an einer Trennplatte (140), die zwischen einem oberen Getriebegehäuse (114) des Azimuttriebwerks (100) und einem Schwenklager (156) des Azimuttriebwerks (100) angeordnet ist.

7. Verfahren nach einem der vorstehenden Ansprüche, ferner umfassend das Bestimmen eines gewünschten Schmiermittelfüllstands des Azimuttriebwerks (100) basierend auf der bestimmten Installationsorientierung und den Verfahrensschritt des Anpassens einer Schmiermittelmessstelle basierend auf dem bestimmten gewünschten Schmiermittelfüllstand.

8. Verfahren nach einem der vorstehenden Ansprüche, ferner umfassend das Fixieren der angepassten Messstelle der Schmiermittelfüllstandsmessvorrichtung (170).

9. Azimuttriebwerk (100) für ein Schiff, wobei das Azimuttriebwerk (100) betreibbar ist für einen Neigungsinstallationswinkel (α, β1, β2, γ), umfassend:
- eine Azimuteinheit (104) zum Schwenken des Azimuttriebwerks (100), und
- eine anpassbare Schmiermittelfüllstandsmessvorrichtung (170), die zum Messen eines Schmiermittelfüllstands an der Azimuteinheit (104) angeordnet ist, wobei die Schmiermittelfüllstandsmessvorrichtung (170) anpassbar ist, um eine Schmiermittelfüllstandsmessstelle der Schmiermittelfüllstandsmessvorrichtung (170) einzustellen, wobei die Schmiermittelmessvorrichtung einschließt:
ein die Schmiermittelfüllstandsmessstelle definierendes bewegliches Messrohr (174), wobei eine Erweiterungslänge H des Messrohrs (174) in Situationen mit großen Neigungswinkeln von etwa 8° im Vergleich zu Installationsorientierungen, die einen Neigungswinkel von 0° aufweisen, gegebenenfalls bis zu 200 mm oder mehr anpassbar sein muss, um eine Messung an einer geeigneten Stelle in der ersten Schmiermittelkammer 160 zu gewährleisten;
ein Klemmelement (184), das dazu konfiguriert ist, das Messrohr (174) lösbar so zu sichern, dass nach Anpassen der Schmiermittelfüllstandsmessvorrichtung (170) das bewegliche Messrohr (174) durch Anziehen des Klemmelements (184) in der angepassten Position fixiert wird.

10. Azimuttriebwerk (100) nach Anspruch 9, ferner umfassend:
ein oberes Getriebegehäuse (114); und
eine Trennplatte (140), die zwischen dem oberen Getriebegehäuse (114) und der Azimuteinheit (104) angeordnet ist,
wobei die Schmiermittelfüllstandsmessvorrichtung (170) an der Trennplatte (140) angeordnet ist.

11. Azimuttriebwerk (100) nach einem der Ansprüche 9 bis 10, wobei:
die Schmiermittelfüllstandsmessvorrichtung (170) dazu konfiguriert ist, einen diskreten Messbereich einschließlich mindestens einer Schmiermittelfüllstandsmessstelle bereitzustellen; oder
die Schmiermittelfüllstandsmessvorrichtung (170) dazu konfiguriert ist, einen kontinuierlichen Messbereich bereitzustellen.

12. Azimuttriebwerk (100) nach einem der Ansprüche 9 bis 11, wobei:
die Schmiermittelfüllstandsmessvorrichtung (170) mit einer Steuereinheit des Azimuttriebwerks (100) verbunden werden kann.

## Revendications

1. Procédé pour régler un dispositif de mesure de niveau de lubrifiant (170) d'un propulseur d'azimut (100) installé dans un navire marin, le procédé comprenant :
la détermination d'une orientation d'installation du propulseur d'azimut (100) dans le navire marin en déterminant un angle d'installation d'inclinaison (α, β1, β2, γ) du propulseur d'azimut (100) ; et
l'ajustement d'un emplacement de mesure de lubrifiant du dispositif de mesure de niveau de lubrifiant (170) sur la base de l'orientation d'installation déterminée du propulseur d'azimut (100) en ajustant une position d'un tube de mesure mobile (174) du dispositif de mesure de niveau de lubrifiant (170) ;
dans lequel un tableau, une équation, un diagramme ou un graphique est utilisé pour déterminer directement un réglage de l'emplacement de mesure du lubrifiant du dispositif de mesure de niveau de lubrifiant (170) sur la base de l'orientation d'installation déterminée du propulseur d'azimut (100), dans lequel ledit tableau est prévu pour montrer une longueur d'extension (H) du tube de mesure (174) en fonction d'un ou plusieurs des angles d'installation d'inclinaison (α, β1, β2, γ).

2. Procédé selon l'une quelconque des revendications précédentes, dans lequel l'étape de procédé consistant à ajuster un emplacement de mesure de lubrifiant comprend l'ajustement de l'emplacement de mesure de lubrifiant dans un premier compartiment de lubrifiant (160) du propulseur d'azimut, le premier compartiment (160) de lubrifiant étant défini par une couronne d'orientation (156) pour orienter le propulseur d'azimut (100), une tige azimutale (144) du propulseur d'azimut (100) et une plaque de séparation (140) interposée entre la couronne d'orientation (156) et un boitier de transmission supérieur (114).

3. Procédé selon l'une quelconque des revendications précédentes, dans lequel l'emplacement de mesure de lubrifiant est ajusté pour permettre de déterminer si une couronne d'orientation (156) du propulseur d'azimut (100) pour orienter le propulseur d'azimut (100) est immergée dans le lubrifiant dans une mesure souhaitée.

4. Procédé selon l'une quelconque des revendications précédentes, dans lequel l'emplacement de mesure de lubrifiant est ajusté pour permettre de déterminer si un réducteur supérieur (102) du propulseur d'azimut (100) est au moins partiellement immergé dans le lubrifiant.

5. Procédé selon l'une quelconque des revendications précédentes, dans lequel l'emplacement de mesure de lubrifiant est ajusté pour permettre de déterminer si le niveau de lubrifiant est inférieur à une couronne d'orientation (156) du propulseur d'azimut (100) pour orienter le propulseur d'azimut (100).

6. Procédé selon l'une quelconque des revendications précédentes, comprenant en outre l'agencement du dispositif de mesure de niveau de lubrifiant (170) au niveau d'une plaque de séparation (140) interposée entre un boitier de transmission supérieur (114) du propulseur d'azimut (100) et une couronne d'orientation (156) du propulseur d'azimut (100).

7. Procédé selon l'une quelconque des revendications précédentes, comprenant en outre la détermination d'un niveau de lubrifiant souhaité du propulseur d'azimut (100) sur la base de l'orientation d'installation déterminée et l'étape de procédé d'ajustement d'un emplacement de mesure de lubrifiant basée sur le niveau de lubrifiant souhaité déterminé.

8. Procédé selon l'une quelconque des revendications précédentes, comprenant en outre la fixation de l'emplacement de mesure ajusté du dispositif de mesure de niveau de lubrifiant (170).

9. Propulseur d'azimut (100) pour un navire marin, ledit propulseur d'azimut (100) pouvant fonctionner pour un angle d'installation d'inclinaison (α, β1, β2, γ), comprenant :
- une unité azimutale (104) pour orienter le propulseur d'azimut (100) ; et
- un dispositif de mesure de niveau de lubrifiant ajustable (170) agencé pour mesurer un niveau de lubrifiant au niveau de l'unité azimutale (104), le dispositif de mesure de niveau de lubrifiant (170) étant ajustable pour régler un emplacement de mesure de niveau de lubrifiant du dispositif de mesure de niveau de lubrifiant (170), dans lequel le dispositif de mesure de lubrifiant comprend :
un tube de mesure mobile (174) définissant l'emplacement de mesure de niveau de lubrifiant, dans lequel une longueur d'extension H du tube de mesure (174) peut être réglable jusqu'à environ 200 mm ou plus dans des situations ayant de grands angles d'inclinaison d'environ 8 ° par comparaison à des orientations d'installation ayant un angle d'inclinaison de 0 ° pour assurer une mesure à un emplacement correct dans le premier compartiment de lubrifiant 160 ;
un élément de serrage (184) configuré pour fixer de manière amovible le tube de mesure (174) de sorte qu'après l'ajustement du dispositif de mesure de niveau de lubrifiant (170), le tube de mesure mobile (174) soit fixé dans la position ajustée en serrant l'élément de serrage (184).

10. Propulseur d'azimut (100) selon la revendication 9, comprenant en outre :
un boitier de transmission supérieur (114) ; et
une plaque de séparation (140) interposée entre le boitier de transmission supérieur (114) et l'unité azimutale (104),
dans lequel le dispositif de mesure de niveau de lubrifiant (170) est agencé au niveau de la plaque de séparation (140).

11. Propulseur d'azimut (100) selon l'une quelconque des revendications 9 à 10, dans lequel :
le dispositif de mesure de niveau de lubrifiant (170) est configuré pour fournir une plage de mesures discrètes comprenant au moins un emplacement de mesure de niveau de lubrifiant ; ou
le dispositif de mesure de niveau de lubrifiant (170) est configuré pour fournir une plage de mesures continue.

12. Propulseur d'azimut (100) selon l'une quelconque des revendications 9 à 11, dans lequel :
le dispositif de mesure de niveau de lubrifiant (170) peut être connecté à une unité de commande du propulseur d'azimut (100).
